# EUROPEAN PATENT APPLICATION

(11) **EP 4 387 013 A1**
(43) Date of publication of application: **19.06.2024**
(21) Application number: 23215501.0
(22) Date of filing: 11.12.2023
(51) Int. Cl.: H01R 43/26, B25J 15/00, H01R 12/79

(54) **ASSEMBLY METHOD FOR ELECTRONIC APPARATUS AND ASSEMBLY METHOD FOR PROJECTION DISPLAY APPARATUS**

(30) Priority: 12.12.2022 JP 2022198030
(71) Applicant: Seiko Epson Corporation, Tokyo 160-8801 (JP)
(72) Inventor: SHIMADA, Yuji, Suwa-shi, Nagano, 392-8502 (JP)
(74) Representative: MERH-IP Matias Erny Reichl Hoffmann Patentanwälte PartG mbB

(57) **Abstract**

An assembly method for an electronic apparatus is assembling an electronic apparatus by performing coupling work of a branched flat cable including a base end portion and a first end portion and a second end portion branched from the base end portion and having flexibility using an assembly apparatus. The assembly apparatus includes a suction unit, a gripping unit, a robot arm unit, and a control unit. The method includes a first gripping step of gripping a first end portion, a first coupling step of coupling the first end portion to a first connector, a first release step of releasing the gripping, a suction step of suctioning a second end portion, a second gripping step of gripping the second end portion, a second coupling step of coupling the second end portion to a second connector, and a second release step of releasing the gripping of the second end portion.

## Description

The present application is based on, and claims priority from JP Application Serial Number 2022-198030, filed December 12, 2022, the disclosure of which is hereby incorporated by reference herein in its entirety.

### BACKGROUND

### 1. Technical Field

The present disclosure relates to an assembly method for an electronic apparatus and an assembly method for a projection display apparatus.

### 2. Related Art

In an assembly process of an electronic apparatus, coupling work to insert an attached portion of a flexible cable into a connector may be necessary. The coupling work is manually performed in related art, however, automation using a robot or the like is studied.

For example, JP-A-2018-103334 discloses an electronic apparatus assembly apparatus including a cable holding tool holding a belt-like cable by vacuum suction of the cable and control of a position of the cable in a width direction, a robot unit moving the cable holding tool relative to the electronic apparatus, and a control unit actuating the robot unit. According to the electronic apparatus assembly apparatus, an attached portion of the belt-like cable may be inserted into a connector of the electronic apparatus and coupled. Thereby, assembly work of the electronic apparatus may be automated.

Depending on the electronic apparatus to be assembled, a branched flat cable having a shape bifurcated in the middle may be used. The branched flat cable has e.g., one base end portion and a first end portion and a second end portion formed by bifurcation of the base end portion. When work to couple the branched flat cable to connectors is automated, a coupling action of the base end portion, a coupling action of the first end portion, and a coupling action of the second end portion are necessary.

However, for example, when the coupling action of the second end portion is performed after the coupling action of the first end portion, automation of the coupling action of the second end portion is difficult. Specifically, when the first end portion is coupled to the connector, the second end portion is pulled by the first end portion and closer to a board or the like of the electronic apparatus. Under the condition, the second end portion takes a position attached to the board or the like and harder to be held by the cable holding tool disclosed in JP-A-2018-103334. Accordingly, automation of the work to couple the branched flat cable becomes an issue.

### SUMMARY

An assembly method for an electronic apparatus according to an application example of the present disclosure is an assembly method for an electronic apparatus of assembling an electronic apparatus by performing coupling work to couple a branched flat cable including a base end portion and a first end portion and a second end portion branched from the base end portion and having flexibility to a first connector and a second connector using an assembly apparatus, the assembly apparatus includes a suction unit suctioning the branched flat cable, a gripping unit having a pair of chucks opening and closing and nipping the branched flat cable in width directions, a robot arm unit relatively moving the suction unit and the gripping unit to the first connector and the second connector, and a control unit controlling actions of the suction unit, the gripping unit, and the robot arm unit, and the method includes a first gripping step of gripping the first end portion by the gripping unit, a first coupling step of coupling the gripped first end portion to the first connector, a first release step of releasing the gripping of the first end portion, a suction step of, after the first release step, suctioning the second end portion by the suction unit, a second gripping step of, after the suction step, gripping the second end portion by the gripping unit, a second coupling step of coupling the gripped second end portion to the second connector, and a second release step of releasing the gripping of the second end portion.

An assembly method for a projection display apparatus according to an application example of the present disclosure includes the assembly method for an electronic apparatus according to the application example of the present disclosure and assembles a projection display apparatus.

### BRIEF DESCRIPTION OF THE DRAWINGS

FIG. 1 is a perspective view showing an example of a configuration of an assembly apparatus used for an assembly method for an electronic apparatus according to an embodiment.
FIG. 2 is a perspective view showing a branched flat cable, a functional module, and a circuit board in FIG. 1.
FIG. 3 is a sectional view showing the branched flat cable, the functional module, and the circuit board in FIG. 2.
FIG. 4 shows a configuration of an assembly tool in FIG. 1.
FIG. 5 shows the configuration of the assembly tool in FIG. 1.
FIG. 6 shows the configuration of the assembly tool in FIG. 1.
FIG. 7 is a functional block diagram of the assembly apparatus shown in FIG. 1.
FIG. 8 is a flowchart showing a configuration of an assembly method for an electronic apparatus according to an embodiment.
FIG. 9 is a diagram for explanation of the assembly method for an electronic apparatus shown in FIG. 8 in a sectional view showing a state before a second end portion of the branched flat cable is inserted into a second connector.
FIG. 10 is a diagram for explanation of the assembly method for an electronic apparatus shown in FIG. 8 in a sectional view showing a state in which a suctioned part of the second end portion is suctioned by a suction unit.
FIG. 11 is a diagram for explanation of the assembly method for an electronic apparatus shown in FIG. 8 in a side view of the assembly tool and the second end portion shown in FIG. 10 as seen from a minus side of an X-axis.
FIG. 12 is a diagram for explanation of the assembly method for an electronic apparatus shown in FIG. 8 in a sectional view showing a state in which the suction unit suctioning the suctioned part is pulled upward.
FIG. 13 is a diagram for explanation of the assembly method for an electronic apparatus shown in FIG. 8 in a side view of the assembly tool and the second end portion shown in FIG. 12 as seen from the minus side of the X-axis.
FIG. 14 is a diagram for explanation of the assembly method for an electronic apparatus shown in FIG. 8 in a side view of a state in which a distance between chucks is reduced as seen from the minus side of the X-axis.
FIG. 15 is a diagram for explanation of the assembly method for an electronic apparatus shown in FIG. 8 in a side view of a state in which a gripped part is nipped in thickness directions between a supporting portion and a nipper as seen from the minus side of the X-axis.
FIG. 16 is a diagram for explanation of the assembly method for an electronic apparatus shown in FIG. 8 in a sectional view in a state in which the second end portion gripped by a gripping unit is inserted into the second connector.
FIG. 17 is a flowchart showing a configuration of an assembly method for a projection display apparatus according to an embodiment.
FIG. 18 is a diagram for explanation of the assembly method for a projection display apparatus shown in FIG. 17.
FIG. 19 is a diagram for explanation of the assembly method for a projection display apparatus shown in FIG. 17.

### DESCRIPTION OF EMBODIMENTS

As below, an assembly method for an electronic apparatus and an assembly method for a projection display apparatus of the present disclosure will be explained in detail based on embodiments shown in the accompanying drawings.

### 1. Assembly Apparatus of Electronic Apparatus

First, an example of a configuration of an assembly apparatus used for an assembly method for an electronic apparatus according to an embodiment is explained.

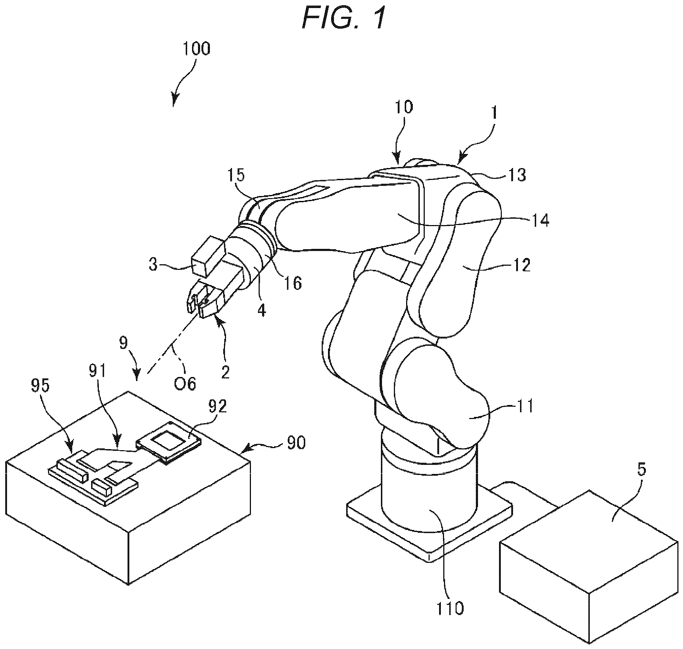

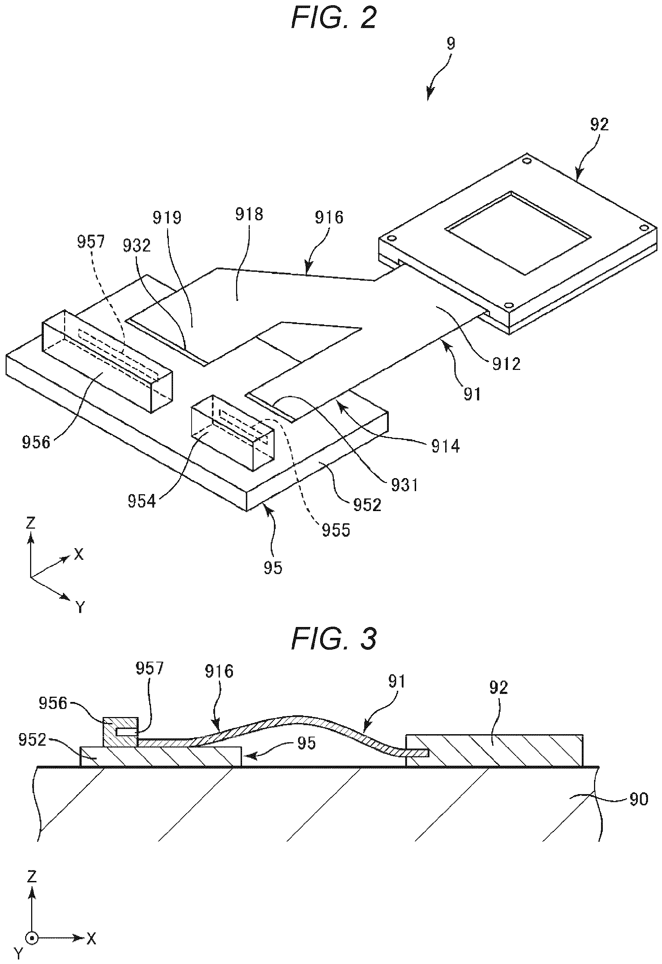

FIG. 1 is a perspective view showing an example of a configuration of an assembly apparatus 100 used for the assembly method for an electronic apparatus according to the embodiment. FIG. 2 is a perspective view showing a branched flat cable 91, a functional module 92, and a circuit board 95 in FIG. 1. FIG. 3 is a sectional view showing the branched flat cable 91, the functional module 92, and the circuit board 95 in FIG. 2.

Note that, in the respective drawings of this application, an X-axis, a Y-axis, and a Z-axis are set as three axes orthogonal to one another. The respective axes are shown by arrows and the head sides of the arrows are "plus" and the tail sides of the arrows are "minus". In the following description, for example, "X-axis directions" include both a plus direction and a minus direction of the X-axis. The same applies to Y-axis directions and Z-axis directions. Further, in the following description, particularly, the plus side of the Z-axis is also referred to as "upward" and the minus side of the Z-axis is also referred to as "downward".

The assembly apparatus 100 shown in FIG. 1 performs coupling work to couple the branched flat cable 91 to the circuit board 95. The branched flat cable 91 and the circuit board 95 are mounted on a workbench 90. The branched flat cable 91 is coupled to the circuit board 95, and thereby, an electro-optical apparatus 9 as an electronic apparatus is assembled.

As shown in FIG. 2, the branched flat cable 91 is a cable extracted from the functional module 92, having a belt-like shape, and branched in a γ-shape. The belt-like shape refers to a shape having a cross section of the cable extending in the X-axis directions with a thickness in the Z-axis directions sufficiently thinner than a width in the Y-axis directions. The branched flat cable 91 includes a base end portion 912 and a first end portion 914 and a second end portion 916 branched from the base end portion 912. The base end portion 912 is coupled to the functional module 92. The first end portion 914 and the second end portion 916 are respectively located at the minus side of the X-axis of the base end portion 912. Further, the first end portion 914 and the second end portion 916 are arranged in the Y-axis directions. Note that the number of branches is not limited to two, but may be three or more.

The functional module 92 is a module having an any function and electrically coupled to the circuit board 95 via the branched flat cable 91.

The base end portion 912 has a terminal row (not shown). The terminal row contacts a terminal row (not shown) at the functional module 92 side in the functional module 92.

The first end portion 914 has a terminal row 931 provided in an end part at the minus side of the X-axis and extending in the Y-axis directions. The terminal row 931 is electrically coupled to the terminal row of the base end portion 912 via wiring (not shown) laid in the branched flat cable 91.

The second end portion 916 has a terminal row 932 provided in an end part at the minus side of the X-axis and extending in the Y-axis directions. The terminal row 932 is electrically coupled to the terminal row of the base end portion 912 or the terminal row 931 via wiring (not shown) laid in the branched flat cable 91.

The circuit board 95 has a wiring board 952 on which wiring (not shown) is laid and a first connector 954 and a second connector 956 provided on the wiring board 952.

As shown in FIG. 2, the first connector 954 has an inserted part 955 opening toward the plus side of the X-axis, into which the first end portion 914 is inserted. The assembly apparatus 100 performs work to insert the first end portion 914 into the inserted part 955. Inside of the inserted part 955, a terminal row (not shown) is provided. When the first end portion 914 is inserted into the inserted part 955, the terminal row 931 of the first end portion 914 and the terminal row provided inside of the inserted part 955 contact and are mutually electrically coupled.

As shown in FIG. 2, the second connector 956 has an inserted part 957 opening toward the plus side of the X-axis, into which the second end portion 916 is inserted. The assembly apparatus 100 performs work to insert the second end portion 916 into the inserted part 957. Inside of the inserted part 957, a terminal row (not shown) is provided. When the second end portion 916 is inserted into the inserted part 957, the terminal row 932 of the second end portion 916 and the terminal row provided inside of the inserted part 957 contact and are mutually electrically coupled.

Note that, in FIGS. 1 to 3, the state before the branched flat cable 91 is coupled to the circuit board 95 is shown. The branched flat cable 91 has flexibility (is flexible). Accordingly, the first end portion 914 and the second end portion 916 before the coupling work are free ends and tend to hang down under their own weights. Particularly, as shown in in FIG. 3, the second end portion 916 after the first end portion 914 is coupled tends to take a position attached to the wiring board 952. Accordingly, the assembly apparatus 100 is required to grip the second end portion 916 in the position and be subjected to coupling work. Note that the branched flat cable 91 may be e.g., a cable called an FPC (Flexible Printed Circuits), an FFC (Flexible Flat Cable), or the like.

The first connector 954 and the second connector 956 are maintained in the inserted states by fitting with the branched flat cable 91. The fitting method is not particularly limited, but a one-action fitting method is employed as an example in the embodiment.

The assembly apparatus 100 shown in FIG. 1 includes a robot 1 having a robot arm unit 10 and a base 110, an assembly tool 2, a camera 3, a force detection unit 4, and a control unit 5. As below, configurations of the respective units will be sequentially explained.

### 1.1. Robot

The robot 1 shown in FIG. 1 is a six-axis vertical articulated robot as an example. Note that the robot 1 may be a horizontal articulated robot (scalar robot) or a dual-arm articulated robot.

The base 110 is a part for attachment of the robot arm unit 10 to a placement location. In the embodiment, the base 110 may be placed on a floor. Note that the placement location of the base 110 is not limited to the floor or the like, may be e.g., a wall, a ceiling, a pedestal, a movable platform, or the like.

The robot arm unit 10 has an arm 11, an arm 12, an arm 13, an arm 14, an arm 15, and an arm 16. These arm 11 to arm 16 are sequentially coupled from the proximal end side toward the distal end side. The arm 11 to arm 16 are pivotable relative to the adjacent arm or the base 110. The arm 16 has a disc shape and is pivotable around an axis O6 relative to the arm 15.

The robot 1 has a drive unit (not shown) provided in a joint portion between the arms or a joint portion between the arm and the base 110. The drive unit includes a motor, a reducer, etc. The motor includes e.g., a servo motor such as an AC servo motor or a DC servo motor. The reducer includes e.g., a planetary gear reducer and a wave gearing. Further, the robot 1 has an angle sensor (not shown) detecting a rotation angle of a rotation shaft of the motor or the reducer. The angle sensor includes e.g., a rotary encoder. For example, these drive unit and angle sensor are provided in each joint portion. The operation of the drive unit is controlled by the control unit 5 based on the detection result by the angle sensor.

### 1.2. Assembly Tool

As shown in FIG. 1, the assembly tool 2 is attached to the robot arm unit 10. The assembly tool 2 has a function of suctioning and gripping the branched flat cable 91. The above-described coupling work is performed by the function.

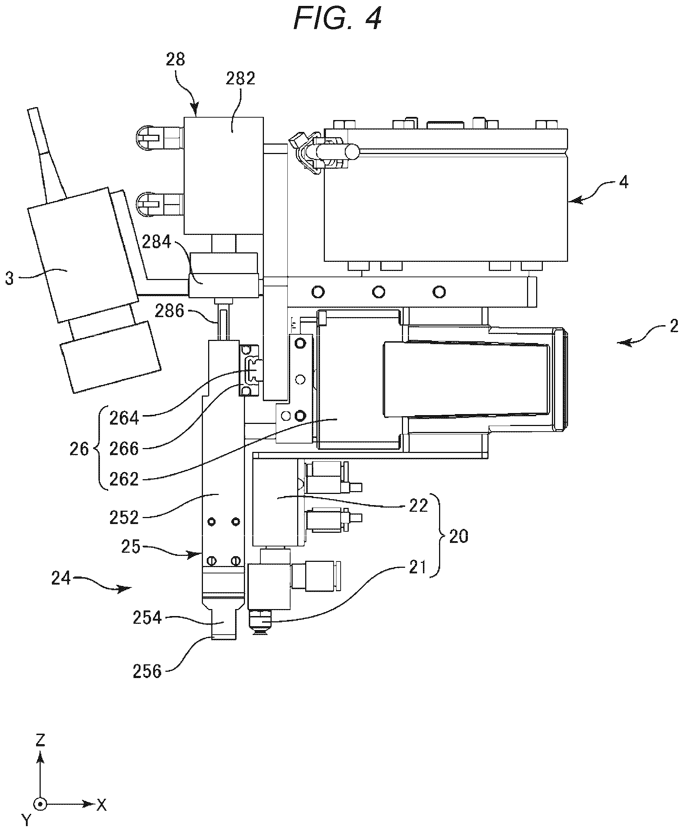

FIGS. 4 to 6 respectively show a configuration of the assembly tool 2 in FIG. 1.

As shown in FIGS. 4 to 6, the assembly tool 2 has a suction unit 20 and a gripping unit 24. The suction unit 20 has a function of attracting and suctioning the branched flat cable 91. The gripping unit 24 has a function of gripping the branched flat cable 91.

As shown in FIG. 4, the suction unit 20 has a suction pad 21 and a suction pad drive section 22.

The suction pad 21 has flexibility and has e.g., a truncated conical shape. As an example, the suction pad 21 shown in FIG. 4 is placed to project downward, and the interior of the suction pad 21 is coupled to a vacuum generator (not shown). When the interior of the suction pad 21 is decompressed by the operation of the vacuum generator, the branched flat cable 91 located below the suction pad 21 is attracted. Then, the attracted branched flat cable 91 may be suctioned to the suction pad 21.

The suction pad drive section 22 translates the suction pad 21 in the Z-axis directions. Thereby, the distance from the distal end of the robot arm unit 10 to the suction pad 21 may be changed. The suction pad drive section 22 includes e.g., an air cylinder. The air cylinder has a simple structure and is lightweight and inexpensive, and is useful as the suction pad drive section 22.

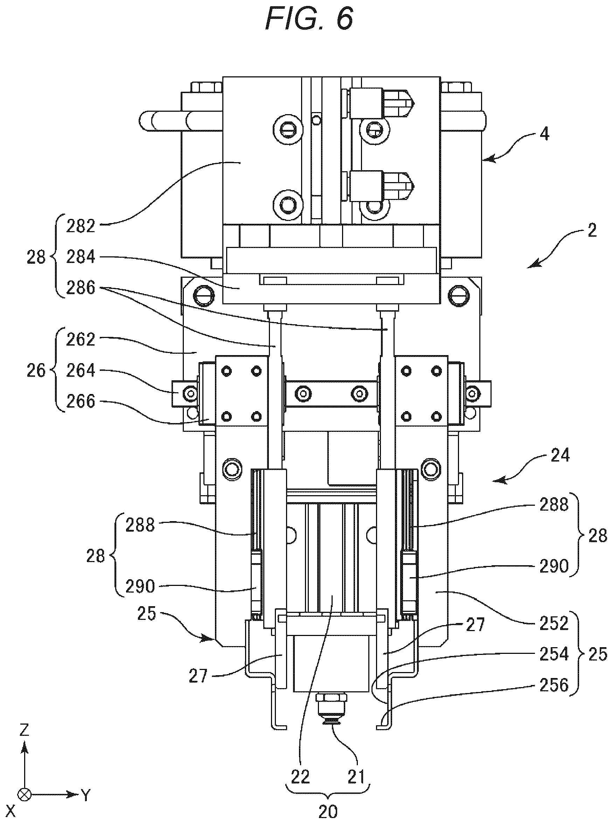

As shown in FIG. 6, the gripping unit 24 has a pair of chucks 25, 25, a chuck drive section 26, a pair of nippers 27, 27, and a nipper drive section 28.

The pair of chucks 25, 25 are openable and closeable along the Y-axis. "Openable and closeable" means that the distance between the chucks 25 in the Y-axis directions is changeable. The change of the distance may be continuous or stepwise. Each chuck 25 has a rod-shaped chuck main body 252 extending along the Z-axis, a position control portion 254 coupled to the lower end of the chuck main body 252, and a supporting portion 256 coupled to the lower end of the position control portion 254.

The chuck main body 252 moves along the Y-axis by the chuck drive section 26. Thereby, the position control portion 254 and the supporting portion 256 coupled to the chuck main body 252 also move along the Y-axis.

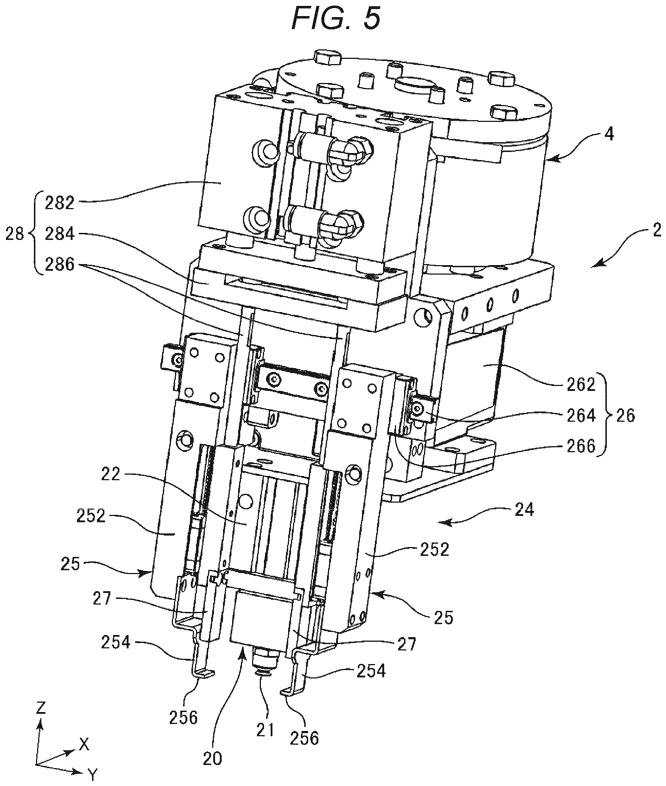

As shown in FIG. 5, the position control portion 254 includes a part having a plate shape spreading along the XZ-plane. The branched flat cable 91 is nipped by the position control portions 254 in the width directions, and thereby, the position of the branched flat cable 91 may be controlled in the Y-axis directions. Note that "width" refers to a width in the Y-axis directions.

As shown in FIG. 5, the supporting portion 256 includes a part having a plate shape spreading along the XY-plane. The pair of supporting portions 256, 256 are moved under the branched flat cable 91, and thereby, the branched flat cable 91 may be supported in thickness directions. Note that "thickness" refers to a thickness in the Z-axis directions.

The chuck drive section 26 includes an electric actuator 262, a guide rail 264, and a slider 266.

The electric actuator 262 has e.g., a stepping motor or the like inside and continuously changes the distance between the pair of chucks 25, 25.

The guide rail 264 is a rail extending along the Y-axis. The slider 266 combined with the guide rail 264 smoothly moves along the Y-axis.

The slider 266 is coupled to the upper end parts of the respective chucks 25. Via the slider 266, the respective chucks 25 may be smoothly moved along the Y-axis.

The pair of nippers 27, 27 are placed above the pair of supporting portions 256, 256 and movable along the Z-axis. Thereby, the branched flat cable 91 may be nipped in the thickness directions between the supporting portions 256 and the nippers 27.

The nipper drive section 28 includes an air cylinder 282, a movable portion 284, and a pair of shafts 286, 286.

The air cylinder 282 translates the nippers 27 in the Z-axis directions via the movable portion 284 and the pair of shafts 286. Thereby, the distance between the supporting portions 256 and the nippers 27 may be changed and the branched flat cable 91 may be nipped in the thickness directions and released.

As shown in FIG. 6, the movable portion 284 intervenes between the air cylinder 282 and the shafts 286 and supports the shafts 286 to freely change the distance between the shafts 286 in the Y-axis directions. As shown in FIG. 6, the shafts 286 are members having rod shapes extending along the Z-axis.

Further, the nipper drive section 28 includes two guide rails 288, 288 and sliders 290, 290 combined with the respective guide rails 288 shown in FIG. 6.

Each guide rail 288 is a rail attached to the chuck 25 and extending along the Z-axis. The slider 290 combined with the guide rail 288 smoothly moves along the Z-axis.

The slider 290 is coupled to the nipper 27. Via the slider 290, each nipper 27 may smoothly move relative to the chuck 25. Further, these guide rail 288 and slider 290 are configured to open and close with opening and closing of the chuck 25.

### 1.3. Camera

For the camera 3, an imaging range is set so that e.g., the position control portions 254, the supporting portions 256, the suction pad 21, etc. may be within the same field of view. The camera 3 is fixed to the assembly tool 2. Thereby, the camera 3 may be moved in the same manner as the assembly tool 2. As a result, the positions of the the position control portions 254, the supporting portions 256, the suction pad 21, etc. in the captured image may be fixed. Accordingly, when image processing is performed on the image for image recognition of the respective parts, the recognition rate may be increased. Note that the camera 3 may be attached to a part different from the assembly tool 2, e.g., the robot 1 or may be attached to a floor, a wall, a ceiling, or the like apart from the robot 1.

The camera 3 may be a monochrome camera, a color camera, or a spectroscopic camera. Or, the camera 3 may be a three-dimensional camera. The image captured by the camera 3 is output to the control unit 5.

### 1.4. Force Detection Unit

The force detection unit 4 detects a force applied to the assembly tool 2, particularly, a force applied to the gripping unit 24. The force includes moment. The force detection unit 4 includes e.g., a six-axis force sensor and a three-axis force sensor. Force detection information detected by the force detection unit 4 is output to the control unit 5.

### 1.5. Control Unit

The control unit 5 has a function of controlling actions of the robot 1 and the respective parts attached thereto.

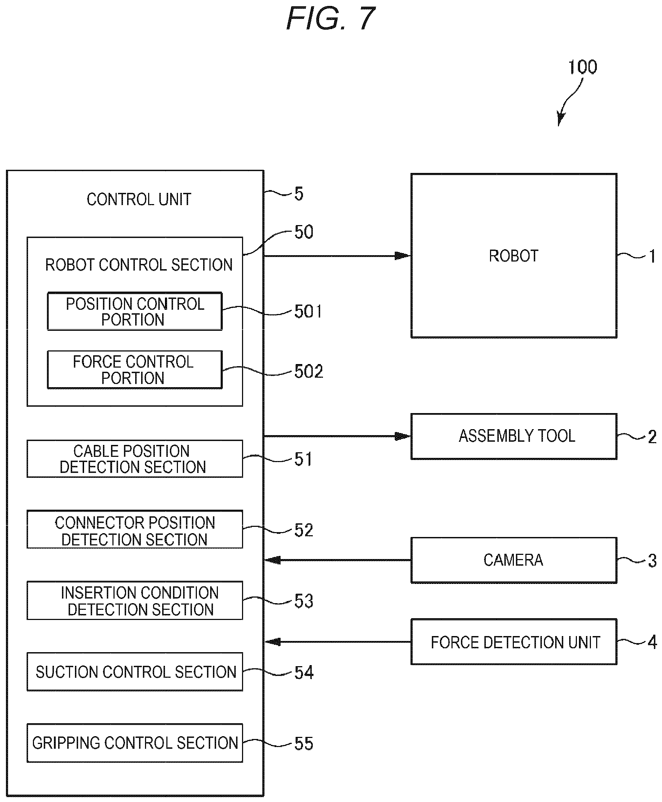

FIG. 7 is a functional block diagram of the assembly apparatus 100 shown in FIG. 1.

As shown in FIG. 7, the control unit 5 includes a robot control section 50, a cable position detection section 51, a connector position detection section 52, an insertion condition detection section 53, a suction control section 54, and a gripping control section 55 as functional sections.

The robot control section 50 controls the action of the robot 1 to control the position and the attitude of the assembly tool 2. The robot control section 50 has a position control portion 501 and a force control portion 502. The position control portion 501 performs position control for controlling the action of the robot 1 so that the assembly tool 2 may be located at predetermined coordinates. The position control refers to control of the action of the robot 1 based on the position of a target position and the position of the assembly tool 2. The force control portion 502 performs force control for controlling the action of the robot 1 based on force detection information. The force control includes e.g., impedance control and force trigger control. In the force trigger control, the action of the robot 1 may be controlled until the force detected by the force detection unit 4 becomes a predetermined value. The impedance control includes e.g., profile control. In the profile control, the action of the robot 1 is controlled so that a force in a predetermined direction detected by the force detection unit 4 may be maintained at a target value.

The cable position detection section 51 detects the position of the branched flat cable 91, particularly, the positions of the first end portion 914 and the second end portion 916 based on the image captured by the camera 3. The connector position detection section 52 detects the positions of the first connector 954 and the second connector 956 based on the image captured by the camera 3. The insertion condition detection section 53 detects the insertion condition of the branched flat cable 91 based on the image captured by the camera 3 and the force detection information detected by the force detection unit 4.

The suction control section 54 controls the action of the suction unit 20 based on the image, the force detection information, a signal indicating the operation state of the vacuum generator, etc. The gripping control section 55 controls the action of the gripping unit 24 based not only on the image and the force detection information but also on signals indicating operation states of the chuck drive section 26 and the nipper drive section 28 or the like.

### 2. Assembly Method for Electronic Apparatus

Next, an assembly method for an electronic apparatus according to an embodiment will be explained. Note that, in the following description, as an example, an assembly method using the above-described assembly apparatus 100 will be explained.

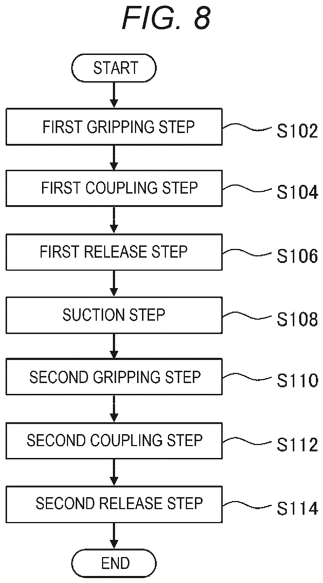

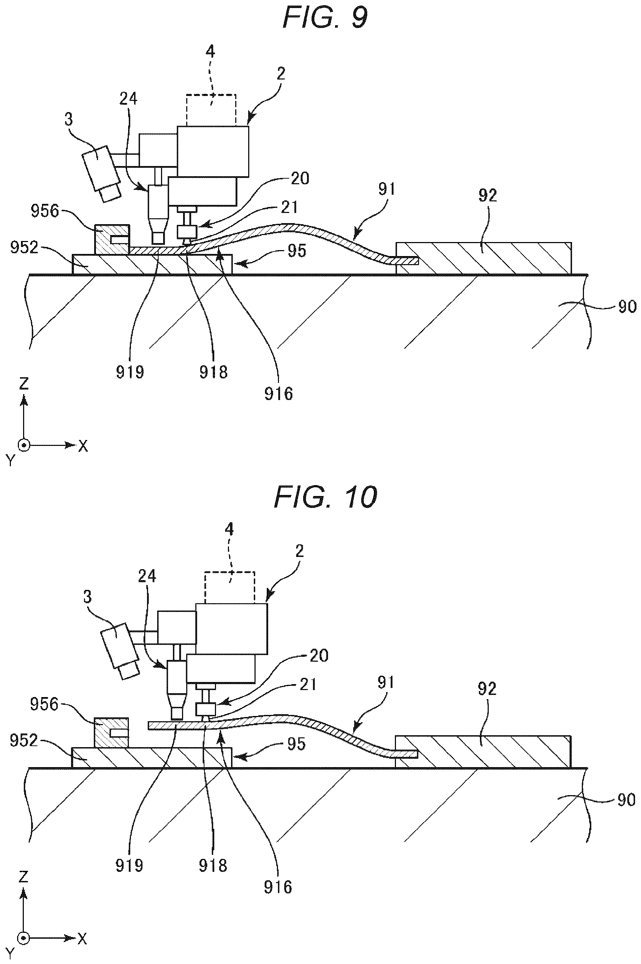

FIG. 8 is a flowchart showing a configuration of the assembly method for an electronic apparatus according to the embodiment. FIGS. 9 to 16 are diagrams for explanation of the assembly method for an electronic apparatus shown in FIG. 8.

As an example, the assembly method for an electronic apparatus shown in FIG. 8 is a method of assembling the electro-optical apparatus 9 as an electronic apparatus by performing coupling work to couple the first end portion 914 and the second end portion 916 of the branched flat cable 91 to the first connector 954 and the second connector 956.

The coupling work includes a first gripping step S102, a first coupling step S104, a first release step S106, a suction step S108, a second gripping step S110, a second coupling step S112, and a second release step S114.

### 2.1. First Gripping Step

At the first gripping step S102, the first end portion 914 of the branched flat cable 91 placed on the workbench 90 is gripped by the gripping unit 24. The gripping action by the gripping unit 24 will be specifically described at the second gripping step S110.

Note that the branched flat cable 91 subjected to the first gripping step S102 may be prepared with the first end portion 914 in the attitude to be easily gripped by the gripping unit 24. In this case, gripping of the first end portion 914 by the gripping unit 24 may be executed without the suction action by the suction unit 20. Note that, depending on the attitude of the first end portion 914, the first end portion 914 may be suctioned by the suction unit 20 prior to the gripping action. Thereby, the gripping action may be efficiently performed. The suction action by the suction unit 20 will be specifically described at the suction step S108.

### 2.2. First Coupling Step

At the first coupling step S104, the first end portion 914 gripped by the gripping unit 24 is coupled to the first connector 954. The coupling action by the gripping unit 24 will be specifically described at the second coupling step S112.

### 2.3. First Release Step

At the first release step S106, the gripping of the first end portion 914 is released. The release action by the gripping unit 24 will be specifically described at the second release step S114.

### 2.4. Suction Step

At the suction step S108, after the first release step S106, first, the second end portion 916 is imaged by the camera 3. The cable position detection section 51 of the control unit 5 performs cable recognition processing on the captured image. Thereby, the second end portion 916 is detected and the relative position relationship of the second end portion 916 to the assembly tool 2 is obtained. Note that, when the relative position relationship of the second end portion 916 to the assembly tool 2 does not widely vary, the image acquisition and the cable recognition processing may be omitted.

Then, the robot control section 50 relatively moves the assembly tool 2 to the second end portion 916 based on the obtained position relationship. In the specification, "relatively move" means that at least one object of two objects moves to change the position relationship between the objects. Then, the suction control section 54 outputs a control signal and controls the suction unit 20 to attract and suction the second end portion 916. In the attraction action by the suction unit 20, even when the second end portion 916 is slightly apart from the suction unit 20, an attraction force may be exerted. Accordingly, even when the position of the second end portion 916 relative to the suction unit 20 is slightly obscure, the attraction action may be performed without trouble. Further, as shown in FIG. 3, even when the second end portion 916 takes a position attached to the wiring board 952, the second end portion 916 can be attracted by movement of the suction unit 20 closer to the upper surface of the second end portion 916.

As a part suctioned by the suction unit 20, an appropriate part is selected in consideration of the second gripping step S110 and the second coupling step S112, which will be described later.

The second end portion 916 shown in FIG. 2 has a suctioned part 918 suctioned by the suction unit 20 and a gripped part 919 gripped by the gripping unit 24. The suctioned part 918 is set closer to the base end portion 912 side than the gripped part 919. Thereby, as shown in FIG. 9, when the suctioned part 918 is suctioned by the suction unit 20, a space may be left at the minus side of the X-axis of the suctioned part 918, and the space may be assigned as the gripped part 919 and a part to be inserted into the second connector 956.

After the suction action by the suction unit 20 is completed, as shown in FIG. 10, the second end portion 916 attached to the wiring board 952 may be moved remaining suctioned to the suction unit 20. Thereby, the second end portion 916 may be moved upward from the wiring board 952 to make a gap between the second end portion 916 and the workbench 90. As a result, at the second gripping step S110, which will be described later, the gripping action by the gripping unit 24 can be performed.

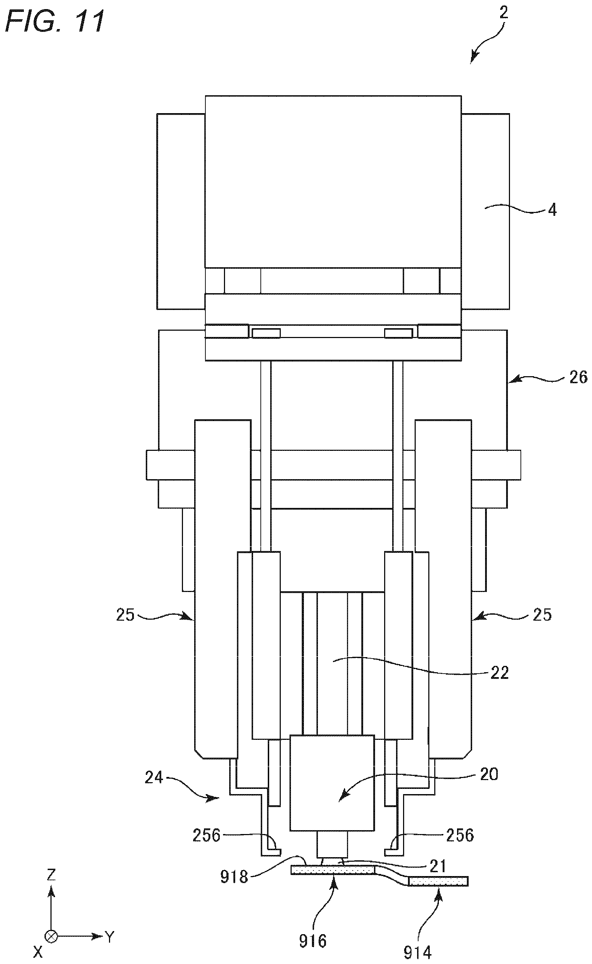

FIG. 11 is a side view of the assembly tool 2 and the second end portion 916 shown in FIG. 10 as seen from the minus side of the X-axis. As shown in FIG. 11, the suction pad 21 at the time is located below the supporting portions 256. That is, the position where the suction unit 20 suctions the suctioned part 918 is set to a position farther from the robot arm 10 than the gripping unit 24. Thereby, the suction pad 21 may be easily moved closer to the upper surface of the second end portion 916, i.e., the suctioned part 918 while an interference between the supporting portions 256 and the second end portion 916 is avoided. Note that "the position farther from the robot arm 10 than the gripping unit 24" refers to a position at the minus side of the Z-axis of the ends (supporting portions 256) of the gripping unit 24.

### 2.5. Second Gripping Step

At the second gripping step S110, first, the gripping control section 55 outputs a control signal to move the chuck drive section 26 and set the distance between the chucks 25 (the distance between the supporting portions 256) to "first distance" sufficiently wider than the width of the gripped part 919. The first distance in set in consideration of the width of the gripped part 919 and variations of the relative position of the gripped part 919 suctioned by the suction pad 21. Therefore, the first distance is not particularly limited, but is set to more than 1.0 time, preferably, 1.1 or more times the width of the gripped part 919. Note that "the distance between the chucks 25" in the specification refers to the shortest distance between the supporting portions 256 in the Y-axis directions.

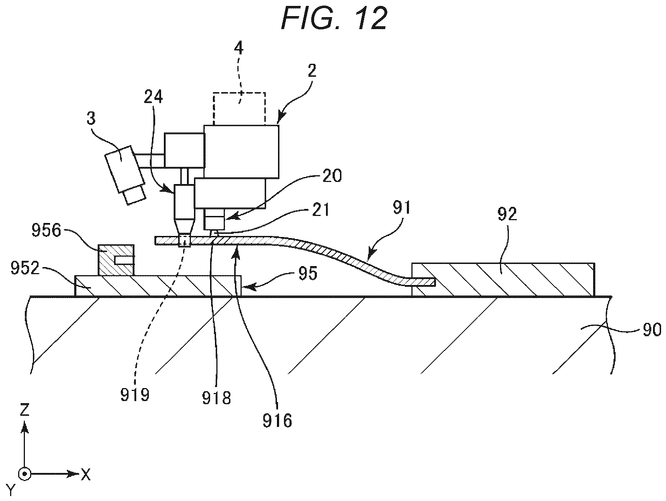

Then, the suction control section 54 outputs a control signal to move the suction pad drive section 22 to move the suction pad 21 upward as shown in FIG. 12. That is, the suction pad drive section 22 performs a shortening action of shortening the distance from the robot arm unit 10 to the suction pad 21.

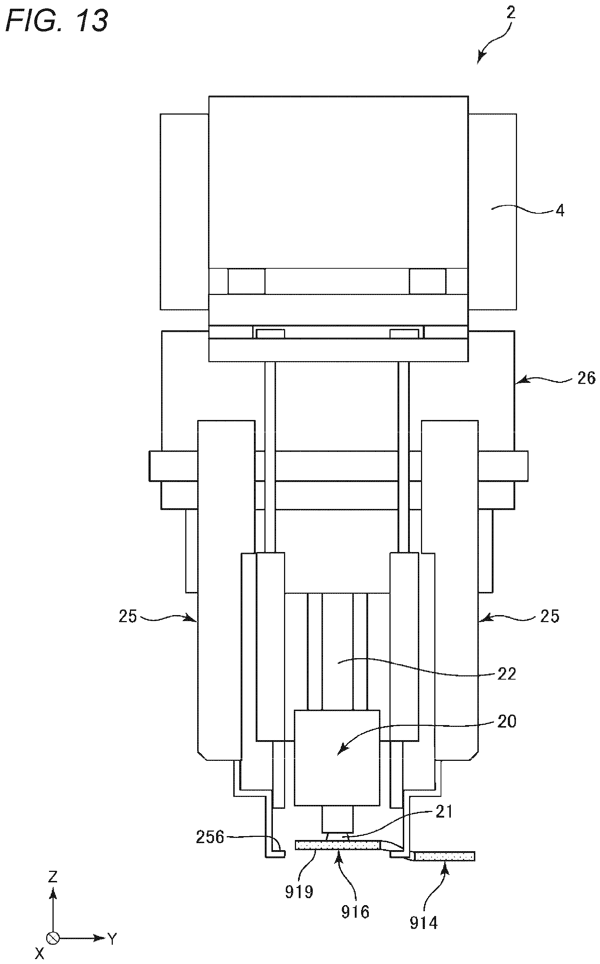

FIGS. 13 to 15 are side views of the assembly tool 2 and the second end portion 916 shown in FIG. 12 as seen from the minus side of the X-axis. The suction pad drive section 22 moves the suction pad 21 upward and, as shown in FIG. 13, positions the suction pad 21 above the supporting portions 256. Thereby, the gripped part 919 suctioned to the suction pad 21 is also moved upward to above the supporting portions 256. As a result, the supporting portions 256 can be moved to under the gripped part 919 without trouble.

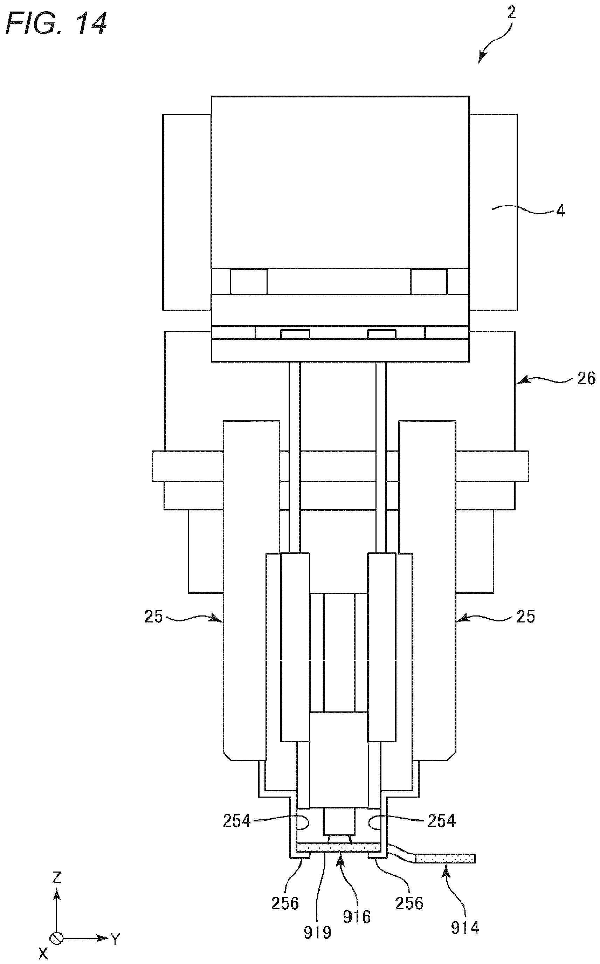

Then, as shown in FIG. 14, the chuck drive section 26 is moved to reduce the distance between the chucks 25 (the distance between the supporting portions 256) to "second distance" smaller than the width of the gripped part 919. The second distance is set to less than 1.0 time the width of the gripped part 919. Thereby, the pair of supporting portions 256, 256 are moved to under the gripped part 919 and support from beneath. Further, the distance between the position control portions 254 is set to substantially the same as the width of the gripped part 919, specifically, to about 1.0 time to 1.5 times the width of the gripped part 919. Thereby, when the gripped part 919 is nipped in the width directions by the pair of position control portions 254, 254, the position of the gripped part 919 in the width directions may be controlled. In the specification, the state in which at least the gripped part 919 is nipped by the pair of position control portions 254, 254 is referred to as "gripping". As a result of gripping, the relative position of the second end portion 916 to the assembly tool 2 may be set to the target position.

Note that the above-described first distance and second distance are appropriately selected according to the width of the gripped part 919. The width of the gripped part 919 may be obtained from the captured image captured by the camera 3. Thereby, even the branched flat cable 91 having different widths in the first end portion 914 and the second end portion 916 and branched flat cables having individual width differences in the respective portions may be easily subjected to assembly.

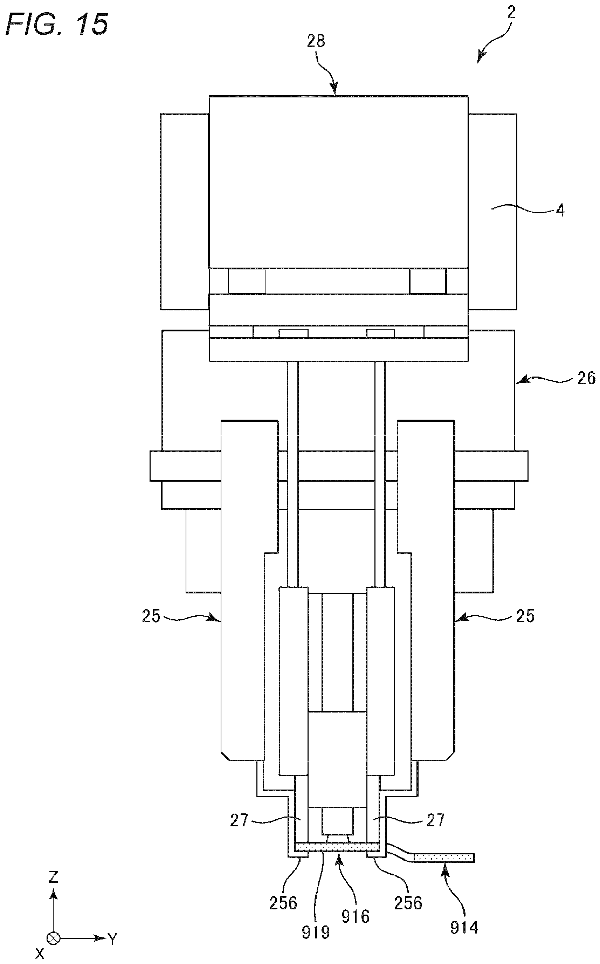

Then, the gripping control section 55 outputs a control signal to move the nipper drive section 28 to move the pair of nippers 27, 27 downward. Thereby, not only the gripped part 919 is nipped in the width directions, but also, as shown in FIG. 15, the nipped gripped part 919 may be nipped in the thickness directions between the supporting portions 256 and the nippers 27. As a result, the gripped part 919 may be gripped with a more sufficient gripping force.

After the gripping is completed, the suction action of the suctioned part 918 by the suction unit 20 is stopped. Note that the time when the suction action is stopped is not particularly limited, but may be at the second coupling step S112 and the second release step S114, which will be described later.

### 2.6. Second Coupling Step

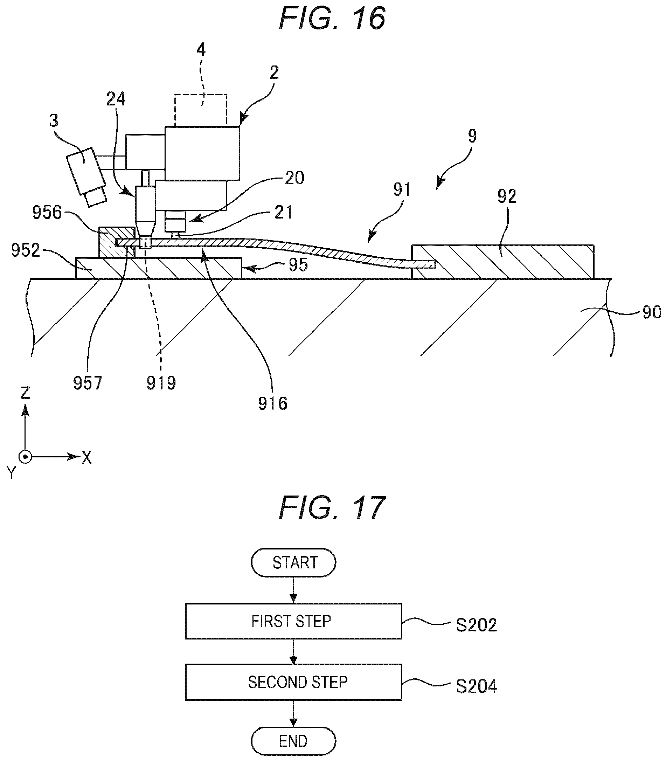

At the second coupling step S112, as shown in FIG. 16, the second end portion 916 gripped by the gripping unit 24 is inserted into the inserted part 957 of the second connector 956.

Specifically, first, the second end portion 916 is moved closer to the second connector 956. For the movement, the position control by the position control portion 501 of the robot control section 50 is preferably used.

Then, the gripped second end portion 916 and the second connector 956 are imaged by the camera 3. The cable position detection section 51 and the connector position detection section 52 of the control unit 5 perform cable recognition processing and connector recognition processing on the captured image. Thereby, the second end portion 916 and the second connector 956 are detected and the relative position relationship thereof relative to the assembly tool 2 is obtained.

Then, the robot control section 50 moves the second end portion 916 closer to the second connector 956 based on the obtained position relationship. In this regard, in a predetermined position, the control is preferably switched to the force control by the force control portion 502 of the robot control section 50. Thereby, the insertion work of the second end portion 916 into the inserted part 957 may be performed by e.g., profile control. As a result, the coupling work of the second end portion 916 to the second connector 956 may be performed more efficiently.

Further, in the gripping unit 24, the gripped part 919 is nipped in the thickness directions between the supporting portions 256 and the nippers 27, and thereby, the gripped part 919 is gripped with a sufficient gripping force. Accordingly, when the second end portion 916 is inserted into the inserted part 957, if a force is applied to the second end portion 916 due to a friction between the inserted part 957 and the second end portion 916 or the like, slipping of the gripped part 919 is suppressed. The slipping of the gripped part 919 is suppressed, and thereby, the position relationship of the gripped part 919 relative to the gripping unit 24 may be maintained in good condition during the coupling work. As a result, a success rate of the coupling work may be increased.

Furthermore, the gripping unit 24 is configured to nip both ends in the width directions of the gripped part 919 in the thickness directions. Accordingly, even when a force is applied to the second end portion 916, the second end portion 916 is harder to rotate around the Z-axis. Thereby, the success rate of the coupling work may be further increased.

After the insertion of the second end portion 916 is completed, the force applied to the assembly tool 2 changes. The insertion condition detection section 53 determines whether the insertion is completed based on the change of the force. Then, when the completion of the insertion is determined, the robot control section 50 ends the insertion work. In the above-described manner, the completion of the coupling work may be detected, and thereby, occurrence of defective coupling may be suppressed and a yield rate may be increased.

### 2.7. Second Release Step

At the second release step S114, the chuck drive section 26 is operated to increase the distance between the chucks 25 to be larger than the width of the gripped part 919.

Then, the assembly tool 2 is retracted by the robot 1. In the above-described manner, the coupling work of the branched flat cable 91 is completed. Note that the assembly method in the specification is synonymous with a manufacturing method.

In the assembly apparatus 100, the suction unit 20 and the gripping unit 24 are attached to the same robot 1, however, the units may be attached to different robots from each other. That is, the above-described respective steps may be performed using an assembly apparatus configured such that two robots may be configured to individually move the the suction unit 20 and the gripping unit 24.

According to the above-described assembly method for an electronic apparatus, the coupling work to couple the branched flat cable 91 may be automated. Automation means controlling an apparatus operating based on a program like the assembly apparatus 100 to perform the coupling work. Thereby, manpower saving may be realized in the assembly of an electronic apparatus. Note that the electronic apparatus to be assembled is not particularly limited, but includes e.g., a projection display apparatus (projector), a portable personal computer, a printer, a personal digital assistant (PDA), a digital still camera, a television, a video camera, a car navigation system, an in-vehicle indicator such as an instrument panel, an electronic organizer, electronic paper, a calculator, a word processor, a workstation, a videophone, and a POS terminal.

### 3. Assembly Method for Projection Display Apparatus

Next, an assembly method for a projection display apparatus according to an embodiment will be explained.

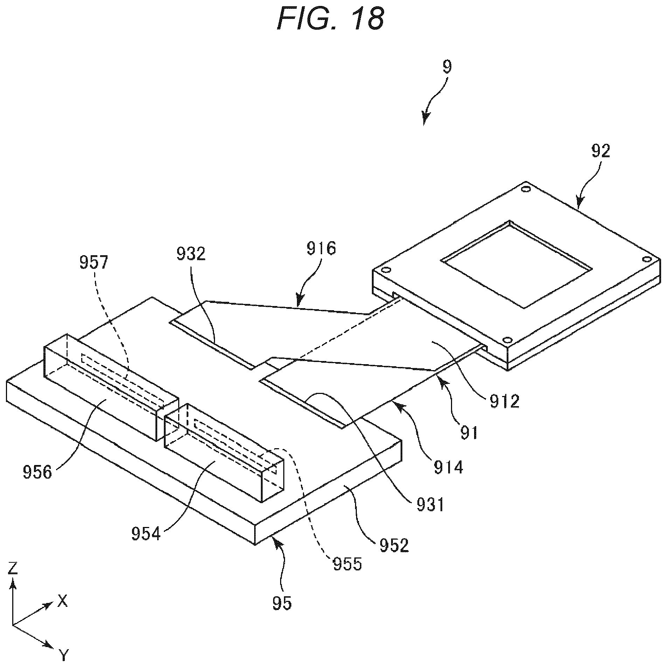

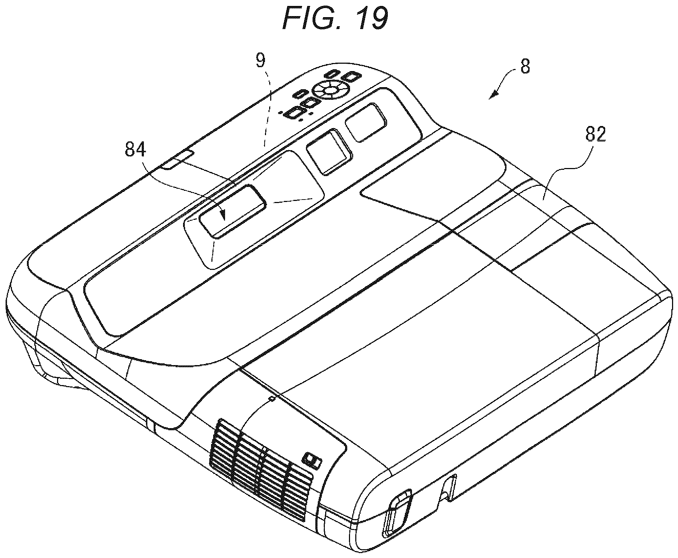

FIG. 17 is a flowchart showing a configuration of the assembly method for a projection display apparatus according to the embodiment. FIGS. 18 and 19 are diagrams for explanation of the assembly method for a projection display apparatus shown in FIG. 17.

The assembly method for a projection display apparatus shown in FIG. 17 includes a first step S202 of assembling the electro-optical apparatus 9 as an electronic apparatus, and a second step S204 of incorporating the obtained electro-optical apparatus 9 in a housing 82 and obtaining a projection display apparatus 8.

As below, the assembly method for a projection display apparatus according to the embodiment will be explained. In the following description, the explanation will be made with a focus on differences from the above-described assembly method for an electronic apparatus and the explanation of the same items will be omitted.

### 3.1. First Step

At the first step S202, the same respective steps as those of the assembly method for an electronic apparatus shown in FIG. 8 are performed using the assembly apparatus 100 and the electro-optical apparatus 9 shown in FIG. 18 is assembled. The electro-optical apparatus 9 shown in FIG. 18 is a modified example of the electro-optical apparatus 9 shown in FIG. 2 and different in the shape of the branched flat cable 91. In the branched flat cable 91 shown in FIG. 18, the base end portion 912 is divided in two layers. The first layer of the cable forms the first end portion 914 and the second layer of the cable forms the second end portion 916. Note that the number of branches of the branched flat cable 91 shown in FIG. 18 may be three or more. In this case, the base end portion 912 may be divided in three or more layers.

### 3.2. Second Step

At the step S204, the electro-optical apparatus 9 shown in FIG. 18 is incorporated into the housing 82. Thereby, the projection display apparatus 8 shown in FIG. 19 is obtained.

According to the above-described assembly method for a projection display apparatus, the coupling work to couple the branched flat cable 91 may be automated. Thereby, manpower saving may be realized in the assembly of the projection display apparatus 8.

### 3.3. Projection Display Apparatus

The projection display apparatus 8 shown in FIG. 19 includes the electro-optical apparatus 9, the housing 82 housing the apparatus, and a projection system 84 provided in the housing 82. The electro-optical apparatus 9 has a function of modulating light output from a light source (not shown) and adding image information. The image light with the image information added thereto is projected on a screen (not shown) or the like via the projection system 84.

### 4. Effects exerted by above-described Embodiments

As described above, the assembly method for an electronic apparatus according to the embodiment is a method of assembling the electro-optical apparatus 9 (electronic apparatus) by performing coupling work to couple the branched flat cable 91 including the base end portion 912 and the first end portion 914 and the second end portion 916 branched from the base end portion 912 and having flexibility to the first connector 954 and the second connector 956 using e.g., the assembly apparatus 100.

The above-described assembly apparatus 100 includes the suction unit 20, the gripping unit 24, the robot arm unit 10, and the control unit 5. The suction unit 20 suctions the branched flat cable 91. The gripping unit 24 has the pair of chucks 25, 25 opening and closing and nipping the branched flat cable 91 in the width directions. The robot arm unit 10 relatively moves the suction unit 20 and the gripping unit 24 to the first connector 954 and the second connector 956. The control unit 5 controls the actions of the suction unit 20, the gripping unit 24, and the robot arm unit 10.

The assembly method for an electronic apparatus according to the embodiment includes the first gripping step S102, the first coupling step S104, the first release step S106, the suction step S108, the second gripping step S110, the second coupling step S112, and the second release step S114. At the first gripping step S102, the first end portion 914 is gripped by the gripping unit 24. At the first coupling step S104, the gripped first end portion 914 is coupled to the first connector 954. At the first release step S106, the gripping of the first end portion 914 is released. At the suction step S108, after the first release step S106, the second end portion 916 is suctioned by the suction unit 20. At the second gripping step S110, after the suction step S108, the second end portion 916 is gripped by the gripping unit 24. At the second coupling step S112, the gripped second end portion 916 is coupled to the second connector 956. At the second release step S114, the gripping of the second end portion 916 is released.

According to the configuration, the electro-optical apparatus 9 (electronic apparatus) may be assembled by the work to couple the branched flat cable 91. Thereby, manpower saving may be realized in the assembly of the electro-optical apparatus 9.

Further, the second end portion 916 may have the gripped part 919 and the suctioned part 918 located at the base end portion 912 side of the gripped part 919.

In this case, the suction step S108 includes the action to suction the suctioned part 918 by the suction unit 20. The second gripping step S110 includes the action to grip the gripped part 919 by the gripping unit 24.

According to the configuration, when the suctioned part 918 is suctioned by the suction unit 20, a space may be left closer to the minus side of the X-axis than the suctioned part 918.

Thereby, the space is used as the gripped part 919 and a part to be inserted into the second connector 956.

It is preferable that the position where the suctioned part 918 is suctioned by the suction unit 20 is a position farther from the robot arm unit 10 than the gripping unit 24. Thereby, the suction unit 20 may be moved closer to the upper surface of the second end portion 916, i.e., the suctioned part 918 while an interference between the gripping unit 24 and the second end portion 916 is avoided. As a result, the suction action may be performed without trouble.

It is preferable that the suction unit 20 has the suction pad 21 and the suction pad drive section 22. The suction pad 21 suctions the suctioned part 918. The suction pad drive section 22 changes the distance from the robot arm unit 10 to the suction pad 21.

Further, the suction step S108 includes the suction action and the shortening action. In the suction action, the suction pad 21 suctions the suctioned part 918. In the shortening action, after the suction action, the suction pad drive section 22 shortens the distance from the robot arm unit 10 to the suction pad 21.

According to the configuration, for example, even when the suction pad 21 is located below the supporting portions 256 at the suction step S108, the suction pad 21 may be located above the supporting portions 256 at the second gripping step S110. Thereby, at the second gripping step S110, the gripped part 919 suctioned to the suction pad 21 may be raised above the supporting portions 256 and the supporting portions 256 can be moved to under the gripped part 919 without trouble.

Further, it is preferable that the chuck 25 has the position control portion 254 and the supporting portion 256. The position control portion 254 controls the position of the gripped part 919 in the width directions. The supporting portion 256 supports the gripped part 919 in the thickness directions.

Furthermore, the gripping unit 24 has the nippers 27 and the nipper drive section 28. The nippers 27 nip the gripped part 919 between the supporting portions 256 and themselves in the thickness directions. The nipper drive section 28 changes the distances between the supporting portions 256 and the nippers 27.

According to the configuration, the position of the gripped part 919 in the width directions may be controlled. As a result, the relative position of the second end portion 916 to the assembly tool 2 may be set to the target position. Further, the gripping unit 24 has the function of nipping the gripped part 919 in the thickness directions, and may grip the gripped part 919 with a more sufficient gripping force.

The assembly apparatus 100 may include the force detection unit 4. The force detection unit 4 is provided between the gripping unit 24 and the robot arm unit 10. The force detection unit 4 detects the force applied to the gripping unit 24. The control unit 5 controls the action of the robot arm unit 10 based on the detected force.

According to the configuration, for example, the coupling work of the second end portion 916 to the second connector 956 may be performed more efficiently.

Further, it is preferable that the control unit 5 controls the action of the robot arm unit 10 to make the branched flat cable 91 to follow the second connector 956 based on the detected force.

According to the configuration, the coupling work of the second end portion 916 to the second connector 956 may be performed more efficiently.

Furthermore, it is preferable that the control unit 5 detects coupling of the branched flat cable 91 to the second connector 956 based on the detected force.

According to the configuration, occurrence of defective coupling may be suppressed and a yield rate may be increased.

The assembly method for a projection display apparatus according to the embodiment has the assembly method for an electronic apparatus according to the embodiment and assembles the projection display apparatus 8.

According to the configuration, manpower saving may be realized in the assembly of the projection display apparatus 8.

As above, the assembly method for an electronic apparatus and the assembly method for a projection display apparatus according to the present disclosure are explained based on the illustrated embodiments, however, the present disclosure is not limited to those.

For example, the assembly method for an electronic apparatus and the assembly method for a projection display apparatus according to the present disclosure may be assembly methods formed by addition of steps for sny purposes to the above-described embodiments.

## Claims

1. An assembly method for an electronic apparatus of assembling an electronic apparatus by coupling work to couple a branched flat cable including a base end portion and a first end portion and a second end portion branched from the base end portion and having flexibility to a first connector and a second connector using an assembly apparatus,
the assembly apparatus including
a suction unit suctioning the branched flat cable,
a gripping unit having a pair of chucks opening and closing and nipping the branched flat cable in width directions,
a robot arm unit relatively moving the suction unit and the gripping unit to the first connector and the second connector, and
a control unit controlling actions of the suction unit, the gripping unit, and the robot arm unit,
the method comprising:
a first gripping step of gripping the first end portion by the gripping unit;
a first coupling step of coupling the gripped first end portion to the first connector;
a first release step of releasing the gripping of the first end portion;
a suction step of, after the first release step, suctioning the second end portion by the suction unit;
a second gripping step of, after the suction step, gripping the second end portion by the gripping unit;
a second coupling step of coupling the gripped second end portion to the second connector; and
a second release step of releasing the gripping of the second end portion.

2. The assembly method for an electronic apparatus according to claim 1, wherein
the second end portion has a gripped part and a suctioned part located at the base end portion side of the gripped part,
the suction step includes an action to suction the suctioned part by the suction unit, and
the second gripping step includes an action to grip the gripped part by the gripping unit.

3. The assembly method for an electronic apparatus according to claim 2, wherein
a position where the suctioned part is suctioned by the suction unit is a position farther from the robot arm unit than the gripping unit.

4. The assembly method for an electronic apparatus according to claim 3, wherein
the suction unit has
a suction pad suctioning the suctioned part, and
a suction pad drive section changing a distance from the robot arm unit to the suction pad, and
the suction step includes
a suction action to suction the suctioned part by the suction pad, and
a shortening action to, after the suction action, shorten the distance by the suction pad drive section.

5. The assembly method for an electronic apparatus according to claim 2, wherein
the chuck has
a position control portion controlling a position of the gripped part in the width directions, and
a supporting portion supporting the gripped part in thickness directions, and
the gripping unit has
nippers nipping the gripped part between the supporting portions and themselves in the thickness directions, and
a nipper drive section changing a distance between the supporting portions and the nippers.

6. The assembly method for an electronic apparatus according to claim 1, wherein
the assembly apparatus includes a force detection unit provided between the gripping unit and the robot arm unit,
the force detection unit detects a force applied to the gripping unit, and
the control unit controls an action of the robot arm unit based on the detected force.

7. The assembly method for an electronic apparatus according to claim 6, wherein
the control unit controls the action of the robot arm unit to make the branched flat cable to follow the second connector based on the detected force.

8. The assembly method for an electronic apparatus according to claim 6, wherein
the control unit detects coupling of the branched flat cable to the second connector based on the detected force.

9. An assembly method for a projection display apparatus comprising the assembly method for an electronic apparatus according to claim 1, and assembling a projection display apparatus.
